# NEUE EUROPÄISCHE PATENTSCHRIFT

(11) **EP 1 399 692 B2**
(45) Veröffentlichungstag und Bekanntmachung des Hinweises auf die Entscheidung über den Einspruch: **20.02.2013**
(45) Hinweis auf die Patenterteilung: 05.11.2008
(21) Anmeldenummer: 01994819.9
(22) Anmeldetag: 20.12.2001
(51) Int. Cl.: F21S 8/00, F21S 8/02, F21V 8/00, E04F 15/02

(54) **BAUELEMENT FÜR EINEN BEGEHBAREN UND/ODER BEFAHRBAREN BEREICH**
CONSTRUCTIVE ELEMENT FOR A WALKABLE AND/OR TRAVELABLE AREA
ELEMENT CONSTITUTIF POUR ZONE POUVANT ETRE EMPRUNTEE A PIED ET/OU A BORD D'UN VEHICULE

(30) Priorität: 13.06.2001 DE 10128689; 21.09.2001 DE 10146604
(43) Veröffentlichungstag der Anmeldung: 24.03.2004
(73) Patentinhaber: Koninklijke Philips Electronics N.V., 5621 BA Eindhoven (NL)
(72) Erfinder: Emde, Thomas, 60389 Frankfurt (DE); Pohl, Heinrich Robert, 50769 Köln (DE)
(74) Vertreter: Verweij, Petronella Danielle
(86) Internationale Anmeldenummer: PCT/EP2001/015103
(87) Internationale Veröffentlichungsnummer: WO 2002/101284

(56) Entgegenhaltungen:
- EP-A- 0 945 674
- DE-A- 19 852 593
- DE-U- 29 510 238

## Beschreibung

Die vorliegende Erfindung betrifft ein als Bodeneinbauleuchte oder als Treppenstufe ausgebildetes Bauelement für einen begehbaren und/oder befahrbaren Bereich innerhalb oder außerhalb eines Gebäudes umfassend ein im Wesentlichen lichtdurchlässiges etwa plattenförmiges Element und eine Beleuchtungseinrichtung mit wenigstens einem Leuchtmittel, wobei das Leuchtmittel Licht stirnseitig in das plattenförmige Element einstrahlt, wobei dieses eine plattenförmige Element lichtstreuend ausgebildet ist und dadurch dieses Licht wenigstens teilweise etwa senkrecht zu dieser Einstrahlrichtung abgelenkt wird, so dass es über die Fläche des plattenförmigen Elements nach oben hin abgegeben wird, wobei das plattenförmige Element zur lichtstreuenden Ausbildung wenigstens einseitig an der Oberfläche bedruckt ist, und wobei Steuereinrichtungen vorgesehen sind für die Leuchtmittel, um diese derart zu steuern, dass diese farbiges licht abgeben und wobei als Leuchtmittel ein Anzahl LED's oder SMD's vorgesehen ist.

In der DE 201 02 832 U1 ist eine Bodeneinbauleuchte für begehbare oder befahrbare Flächen der eingangs genannten Gattung beschrieben. Bei dieser bekannten Bodeneinbauleuchte wird im Bereich einer oberen Abdeckung, die selbst nicht beleuchtet wird, das Licht in eine darunter angeordnete Lichtleitplatte eingespeist, auf deren Unterseite eine Diffusorfolie oder eine aufgedruckte transparente Farbschicht aufgebracht ist. Auch wenn es heißt, dass diese Farbschicht transparent ist, geht dadurch ein Lichtanteil verloren, denn die Farbschicht kann nicht völlig sondern nur teilweise transparent sein. Alternativ kann auch eine Farbschicht auf einer oberseitigen Fläche der Lichtleitplatte vorgesehen sein. Bei diesen bekannten Lösungen ist man in der farblichen Gestaltung nach dem Einbau der Bodeneinbauleuchte farblich festgelegt und verliert einen Teil der Lichtausbeute.

Die Aufgabe der vorliegenden Erfindung besteht darin, bei einem als Bodeneinbauleuchte oder als Treppenstufe ausgebildeten Bauelement für einen begehbaren und/oder befahrbaren Bereich der eingangs genannten Gattung die Flexibilität der Steuerung des Leuchtmittels zu erhöhen.

Die Lösung dieser Aufgabe ergibt sich durch die Merkmale des Anspruch 1.

Zu den Bauelementen im Sinne der oben genannten Definition sind beispielsweise Bodenleuchten zu zahlen. In den Boden eingelassene Leuchten, die in der Regel mit dem diese umgebenden Bodenniveau etwa bündig abschließen, sind bekannt. Bodenleuchten dieser Art können beispielsweise Garten- oder Terrassenleuchten sein oder aber auch Leuchten in Bereichen, in denen Fahrzeuge fahren. Derartige befahrbare Leuchten müssen wegen der Gewichtsbelastung mindestens In ihren oberen Bereichen entsprechend stabil ausgebildet sein. Sie sollten nicht allzu weit aus dem umgebenden Bodenbereich vorstehen.

Die vorliegende Erfindung betrifft aber nicht nur Bodenleuchten der genannten Art, sondern auch Bauelemente im allgemeinen Sinne, die Beleuchtungseinrichtungen aufweisen und innerhalb oder außerhalb von Gebäuden angeordnet sein können. Dies können beispielsweise Treppenstufen sein oder Balkonelemente. Dies können ebenso gut Fußodenteile oder in Fußbodenbereiche eingelassene Bauelemente für Böden der unterschiedlichsten Art sein, beispielsweise für Holzfußböden, Parkettböden, Fliesenböden, Steinböden oder Teppichböden oder auch Kunststoffböden oder dergleichen. Zu den Bauelementen im Sinne der Erfindung zählen auch sogenannte Glasbausteine oder Lichtbausteine mit Beleuchtungseinrichtungen.

Die herkömmlichen Bauelemente der genannten Art, insbesondere herkömmliche Bodenleuchten haben in der Regel als Leuchtmittel Leuchtstofflampen, Glühlampen oder Halogenlampen, die Licht mehr oder weniger punktuell abgeben und verfügen darüber hinaus über entsprechende lichtlenkende Einrichtungen wie Reflektoren und dergleichen. Aus dem Stand der Technik sind auch Kunststoffplatten bekannt, insbesondere Acrylplatten, in die man das Licht stirnseitig einleiten kann und die dann entsprechend lichtstreuend ausgebildet sind, so dass das Licht umgelenkt und über die Fläche der Platte abgegeben wird. Bei den bekannten Beleuchtungsvorrichtungen wird aber immer das Licht in das plattenförmige Element selbst, z. B. in eine Acrylplatte, von dem Leuchtmittel eingestrahlt.

Es ist vorgesehen, dass das Bauelement ein plattenförmiges Element umfasst. Das Leuchtmittel strahlt nun Licht stirnseitig in das plattenförmige Element ein, wobei das Licht dann wenigstens teilweise etwa senkrecht zu dieser Einetrahlrichtung abgelenkt wird, so dass es über das plattenförmige Element nach oben hin abgegeben wird. Für diese Ablenkung oder Umlenkung ist das plattenförmige Element lichtstreuend ausgebildet und dazu entweder wenigstens einseitig an der Oberfläche bedruckt, gesandstrahlt, geätzt, beschichtet, graviert oder beklebt oder das plattenförmige Element weist im inneren eine Fehlstruktur auf, durch die die lichtstreuende Wirkung und Lichtumlenkung erzielt wird. Eine solche Fehlstruktur kann man beispielsweise mittels Laserstrahlen erzlelen; die auf einen bestimmten Bereich innerhalb des plattenförmigen Elements fokussiert werden.

Wenn wenigstens an einer Seite die Oberfläche des plattenförmigen Elements lichtstreuend ausgebildet ist, so verwendet man hierzu vorzugsweise ein Punktraster, Strichraster oder dergleichen, welches vorzugsweise aufgedruckt ist. Man kann ein solches Punktraster oder Strichraster aber ebenso gut durch Ätzen, Sandstrahlen, Beschichten, Gravieren oder Bekleben mit Partikeln erreichen.

Das obere plattenförmige Element im Sinne der Erfindung ist vorzugsweise eine Glasscheibe oder Kunststoffglasscheibe. Wenn es sich um ein Bauelement handelt, welches befahrbar ist, muss naturgemäß wenigstens das obere plattenförmige Element ausreichend stabil ausgebildet sein, d. h., dass es eine entsprechende Materialstärke aufweist.

Die vorliegende Erfindung sieht vor, dass Leuchtmittel verwendet werden, die einerseits einen relativ geringen Energieverbrauch aufweisen und die andererseits in einfacher Weise durch elektronische oder elektrische Maßnahmen vielseitig gesteuert werden können. Als solche Leuchtmittel sind LED's oder SMD's besonders geeignet. Diese Leuchtmittel werden im Rahmen der vorliegenden Erfindung vorzugsweise auf einem Streifen oder in einer Reihe angeordnet und strahlen so das Licht stirnseitig in das oder die plattenförmigen Elemente. Dadurch, dass wenigstens eines der plattenförmigen Elemente vorzugsweise durch ein Raster an seiner Oberfläche oder durch eine entsprechende Fehlstruktur in seinem Inneren die lichtstreuende Wirkung hat, wird das von den Leuchtmitteln in das plattenförmige Element eingestrahlte Licht umgelenkt und dann nach oben hin abgegeben. Für den Betrachter wirkt dies so, als sei das Bauelement selbst in seinem nach oben sichtbaren flächigen Bereich leuchtend, während der Betrachter das einzelne Leuchtmittel in der Regel gar nicht wahrnimmt. Das Leuchtmittel kann durch eine vorzugsweise die plattenförmigen Elemente einfassende Rahmenkonstruktion mindestens teilweise oder vollständig nach oben hin abgedeckt sein, um den genannten Effekt zu erreichen.

Ein Bauelement im Sinne der vorliegenden Erfindung kann relativ großflächig ausgebildet sein, beispielsweise kann es eine vollständige Terrasse oder ein Balkonboden oder eine oder mehrere Treppenstufen umfassen. Auch hier unterscheidet sich das erfindungsgemäße Bauelement von dem Stand der Technik, in dem in der Regel einzelne konkrete in den Boden eingebaute Bodenleuchten verwendet wurden, da gemäß der vorliegenden Erfindung ein ganzer Fußboden oder ein Fußbodenbereich oder Bodenbereich innerhalb oder außerhalb eines Gebäudes flächig leuchtend ausgebildet werden kann.

Durch die Verwendung von LED's oder SMD's als Leuchtmittel besteht der weitere Vorteil, dass man die Lichtfarbe des Leuchtmittels mit relativ einfachen Maßnahmen steuern und somit auch verändern kann. Man kann also das erfindungsgemäße Bauelement farbig leuchtend ausgestalten. Es sind im Rahmen der vorliegenden Erfindung entsprechende Steuereinrichtungen vorgesehen. Über diese oder weitere Steuereinrichtungen sowie Sensoren kann man darüber hinaus eine Steuerung der Leuchtmittel in Abhängigkeit vom einfallenden Tageslicht oder abhängig von einer in der Nähe anwesenden Person oder nach einem beliebigen vorgegebenen Programm (z. B. Tag-/Nachtschaltung) bewirken. Als Sensoren können beispielsweise Fotozellen und/oder Bewegungsmelder verwendet werden.

Diese Steuermittel bieten im Rahmen der vorliegenden Erfindung vielfältige Möglichkeiten für die Gestaltung beleuchteter Bereiche innerhalb und außerhalb von Gebäuden, beispielsweise auch in Gärten oder Parks, im Bereich der Straßenbeleuchtung, in Parkhäusern, auf Flughäfen, in gewerblich genutzten befahrbaren Außenbereichen, in architektonisch hervorzuhebenden Bereichen öffentlicher oder privater Gebäude, wie z. B. in Eingangshallen, Treppenhäusern und dergleichen.

Im Rahmen der vorliegenden Erfindung kann man ein einziges plattenförmiges Element aus Glas oder Kunststoffglas verwenden, welches eine ausreichende Materialstärke besitzt, und in das das Licht über die genannten Leuchtmittel stirnseitig eingespeist wird. Man kann auch ein Verbundglas verwenden, wobei mehrere plattenförmige Elemente im Verbund angeordnet sind und man beispielsweise das Licht stirnseitig nur in eines der plattenförmigen Elemente dieser mehrschichtigen Verbundglasanordnung einleitet. Um zu einer noch energiesparenderen Beleuchtungseinrichtung zu gelangen, kann man Solarzellenelemente verwenden, die man beispielsweise auf eines der plattenförmigen Elemente aufbringt. Solche Solarzellenelemente können auch bei einer Verbundglasanordnung im Verbund angeordnet sein, d. h., beispielsweise, dass eine Platte mit Solarzellenelementen verwendet wird, die eine plattenförmige Schicht einer solchen Verbundglasanordnung bildet, wobei dann in eine weitere Platte der Verbundglasanordnung stirnseitig Licht eingestrahlt wird. Die Verwendung solcher Solarzellenelemente schafft den Vorteil, dass man tagsüber aufgrund der Sonneneinstrahlung Sonnenenergie auffangen kann, die beispielsweise in einem Akkumulator gespeichert wird und man dann nachts diese Energie für den Betrieb der Leuchtmittel verwenden kann, so dass sich gegebenenfalls sogar ein Netzanschluss für eine solche Beleuchtungseinrichtung erübrigt.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
Fig. 1 eine schematisch vereinfachte Schnittdarstellung durch ein erfindungsgemäßes Bauelement, welches als Bodenleuchte ausgebildet ist;
Fig. 2 eine schematisch vereinfachte Ansicht einer Treppe im teilweisen Schnitt mit Treppenstufen, die als Bauelemente im Sinne der vorliegenden Erfindung ausgebildet sind;
Fig. 3 eine vergrößerte schematisch vereinfachte Schnittansicht einer einzelnen Treppenstufe gemäß dem Ausführungsbeispiel von Figur 2.

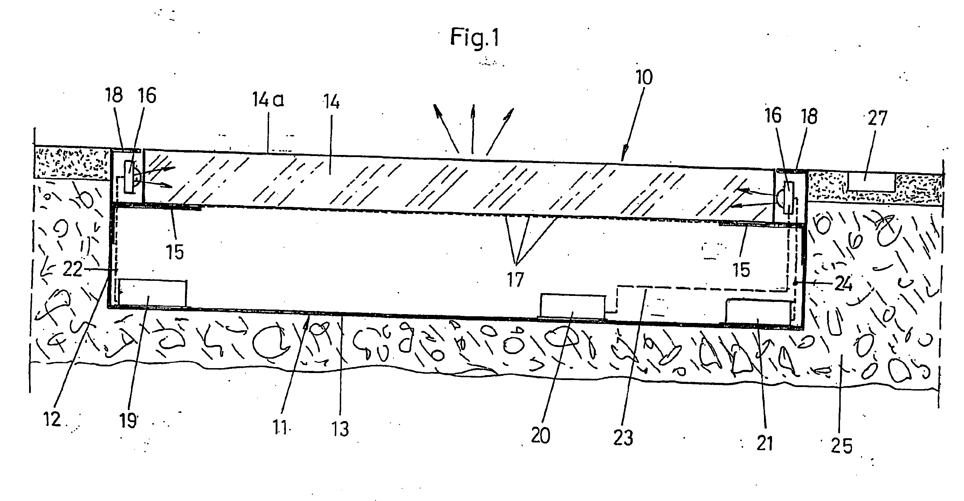

Zunächst wird auf Fig. 1 Bezug genommen. Die Darstellung zeigt schematisch vereinfacht im Schnitt ein Bauelement gemäß der Erfindung, welches als Bodeneinbauleuchte 10 ausgebildet ist. Wie man sieht, ist diese Bodeneinbauleuchte 10 in den diese umgebenden Boden 25 so eingelassen, dass die Bodeneinbauleuchte 10 im Prinzip bündig in einer Ebene oberseitig mit dem umgebenden Boden 25 abschließt. Die erfindungsgemäße Bodeneinbauleuchte 10 besteht aus einem Gehäuse 11, welches im Prinzip ein im Umriss viereckiger oder runder Topf sein kann. Das Gehäuse 11 hat einen Gehäuseboden 13 und von dort aus sich nach oben erstreckende Gehäusewände 12. In dieses Gehäuse eingebaut ist ein plattenförmiges Element 14, bei dem es sich beispielsweise um eine Glasplatte aus dickerem Glas, eine Verbundglasplatte oder eine Kunststoffplatte handeln kann. Das plattenförmige Element 14 ist vorzugsweise etwas dicker, damit es die bei der Begehung bzw. dem Befahren der Bodeneinbauleuchte 10 auftretenden Kräfte aufnimmt. Dieses plattenförmige Element 14 liegt beispielsweise auf entsprechenden Auflagern 15 in dem Gehäuse 11 auf. Es sind Leuchtmittel 16 vorgesehen, die von der Stirnseite her Licht in das plattenförmige Element 14 einstrahlen. Bei diesen Leuchtmitteln 16 kann es sich beispielsweise um eine Anzahl LED's irgendeiner Bauart oder andere Leuchtdioden oder dergleichen in streifenförmiger Anordnung handeln. Leuchtmittel 16 dieser Art können an beiden gegenüberliegenden Seiten, d. h., an beiden Wänden 12 des Gehäuses vorhanden sein, wobei Rahmenkonstruktionen 18, an denen die Leuchtmittel 16 befestigt sind, oder das Gehäuse 11 so ausgebildet sein können, dass sie die Leuchtmittel 16 nach oben hin abdecken. Dadurch kann das Licht nicht direkt nach oben hin abgestrahlt werden und die Leuchtmittel 16 sind für den Betrachter oberhalb der Bodeneinbauleuchte nicht direkt sichtbar. Das in das plattenförmige Element 14 eingestrahlte Licht wird nun durch geeignete Maßnahmen umgelenkt, so dass es durch die Platte 14 fällt und nach oben strahlt. Dazu ist beispielsweise die untere Fläche des plattenförmigen Elements 14 in einem geeigneten Punktraster 17 bedruckt oder entsprechend geätzt, graviert oder ähnliches. Dadurch wird das Licht gestreut und fällt durch die Platte 14 nach oben und wird über die Fläche 14a an der Oberseite der oberen Platte 14 nach oben hin abgegeben. In dem plattenförmigen Element 14 wird das Licht geleitet und gelangt aufgrund der Totalreflexion im wesentlichen nicht nach unten, so dass diesbezüglich keine nennenswerten Lichtverluste entstehen.

Für die Steuerung der Leuchtmittel 16, die vorzugsweise LED's irgendeiner Bauart oder dergleichen sind, sind verschiedene Steuerungselemente vorgesehen, insbesondere Steuerungselemente 19, die über Leitungen 22 mit den Leuchtmitteln 16 verbunden sind, für die farbliche Steuerung der Leuchtmittel 16. Weiterhin können Steuerelemente 20 vorhanden sein, die über Leitungen 23 mit den Leuchtmitteln 16 verbunden sind und die beispielsweise mit einem an oder in der Nähe der Bodeneinbauleuchte 10 vorgesehenen Bewegungsmelder 27 zusammenwirken, so dass die Leuchtmittel 16 eingeschaltet werden, wenn sich eine Person der Bodeneinbauleuchte 10 nähert. Weiterhin können Steuerelemente 21 vorgesehen sein, die über Leitungen 24 mit den Leuchtmitteln 16 verbunden sind und mittels derer beispielsweise eine Helligkeitssteuerung erfolgt, so dass die Leuchtmittel gedimmt werden können oder bei Einbruch der Dunkelheit allmählich eingeschaltet werden. Diese Steuermittel 21 können mit an geeigneter Stelle angebrachten Fotozellen (nicht dargestellt) zusammenwirken.

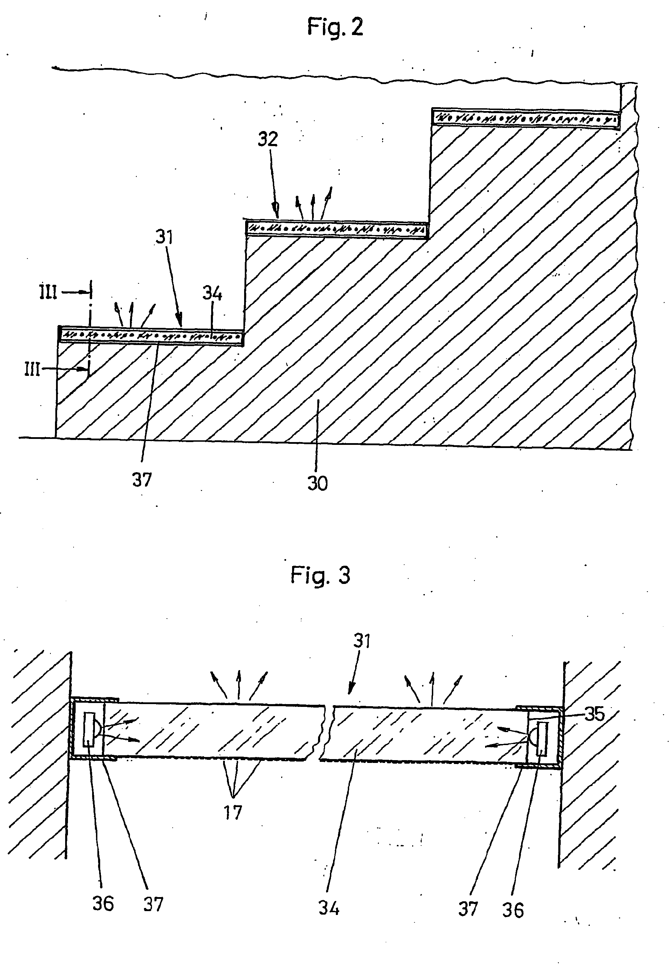

In Figur 2 ist ein weiteres Ausführungsbeispiel der Erfindung in schematisch vereinfachter Form dargestellt. Die Zeichnung zeigt im teilweisen Schnitt eine Treppe 30 mit mehreren Treppenstufen 31, 32, die als flächig leuchtende Bauelemente im Sinne der vorliegenden Erfindung ausgebildet sind. Der Aufbau der Treppenstufen 31, 32 ist im Prinzip ähnlich wie bei dem zuvor unter Bezugnahme auf Figur 1 beschriebenen Ausführungsbeispiel, wobei lediglich die Dimensionen des Bauelements anders sind, da es entsprechend einer Treppenstufe langgestreckt ist. Auch kann man grundsätzlich solche Treppenstufen ohne ein zusätzliches Gehäuse ausbilden. Eine solche Treppenstufe 31, 32 umfasst im Prinzip ein plattenförmiges Element 34, in das dann Leuchtmittel 36 von der Stirnseite 35 her Licht einstrahlen. Beispielsweise hat die Platte 34 wiederum an ihrer unterseitigen Oberfläche eine Bedruckung in einem Punktraster 17, ähnlich wie dies zuvor unter Bezugnahme auf Figur 1 beschrieben wurde, so dass das stirnseitig in das plattenförmige Element 34 abgestrahlte Licht nach oben gestreut wird und durch das aus lichtdurchlässigem Material bestehende plattenförmige Element 34 flächig abgegeben wird, so dass der Eindruck einer leuchtenden Treppenstufe 31 erzeugt wird.

Figur 3 zeigt im Querschnitt in vergrößerter Darstellung eine schematisch vereinfachte prinzipielle Schnittansicht einer erfindungsgemäßen beleuchtbaren Treppenstufe 31 gemäß dem Ausführungsbeispiel von Figur 2. Man erkennt, dass das plattenförmige Element 34, welches aus einem geeigneten Glas oder Kunststoffglas besteht, stirnseitig in etwa U-förmigen Rahmenprofilen 37 gehalten ist, die das plattenförmige Element 34 einfassen. Diese Rahmenprofile 37 nehmen auch in einem Raum neben der stirnseitigen Fläche 35 des plattenförmigen Elements 34 die Leuchtmittel 36 auf, so dass die Leuchtmittel nach oben hin durch die Rahmenprofile 37 abgedeckt sind und ihr Licht nicht unmittelbar nach oben hin, sondern in die Stirnseite 35 des plattenförmigen Elements hinein abgeben. In dem plattenförmigen Element 34 wird das Licht geleitet und aufgrund der Bedruckung z. B. mit einem Punktraster 17 an der Unterseite des plattenförmigen Elements 34 wird eine lichtstreuende Wirkung erzeugt, die zu einer flächigen Abgabe des Lichts nach oben (siehe Pfeile) führt. Die Materialstärke des plattenförmigen Elements 34 muss selbstverständlich so gewählt werden, dass dieses als Treppenstufe 31 begehbar ist. Es ist beispielsweise auch möglich, ein Verbundglas aus mehreren miteinander verbundenen plattenförmigen Elementen einzusetzen und das Licht über die Leuchtmittel 36 stirnseitig nur in eine oder auch in mehrere dieser plattenförmigen Elemente einer solchen Verbundglasplatte einzustrahlen.

## Patentansprüche

1. Als Bodeneinbauleuchte oder als Treppenstufe ausgebildetes Bauelement für einen begehbaren und/oder befahrbaren Bereich innerhalb oder außerhalb eines Gebäudes
umfassend ein im Wesentlichen lichtdurchlässiges etwa plattenförmiges Element und eine Beleuchtungseinrichtung mit wenigstens einem Leuchtmittel,
wobei das Leuchtmittel (16) Licht stirnseitig in das plattenförmige Element (14) einstrahlt,
wobei dieses eine plattenförmige Element (14) lichtstreuend ausgebildet ist und dadurch dieses Licht wenigstens teilweise etwa senkrecht zu dieser Einstrahlrichtung abgelenkt wird, so dass es über die Fläche des plattenförmigen Elements nach oben hin abgegeben wird,
wobei dieses plattenförmige Element (14, 15) mit für eine höhere Gewichtsbelastung ausreichender Materialstärke vorgesehen ist,
wobei das plattenförmige Element zur lichtstreuenden Ausbildung wenigstens einseitig an der Oberfläche bedruckt ist,
wobei als Leuchtmittel (16) eine Anzahl LED's oder SMD's vorgesehen ist,
und wobei Steuereinrichtungen (19) vorgesehen sind für die Leuchtmittel (16), um diese derart zu steuern, dass diese *farbiges* Licht abgeben und um die Lichtfarbe zu verändern.

2. Als Bodeneinbauleuchte oder als Treppenstufe ausgebildetes Bauelement nach Anspruch 1, **dadurch gekennzeichnet, dass** wenigstens ein plattenförmiges Element (14) eine Glasscheibe oder Kunststoffglasscheibe ist.

3. Als Bodeneinbauleuchte oder als Treppenstufe ausgebildetes Bauelement nach Anspruch 1 oder 2, **dadurch gekennzeichnet, dass** wenigstens ein plattenförmiges Element (14) wenigstens einseitig in einem Punktraster (17), Strichraster oder ähnlichem Raster bedruckt ist.

4. Als Bodeneinbauleuchte oder als Treppenstufe ausgebildetes Bauelement nach den Ansprüchen 1 bis 3, **dadurch gekennzeichnet, dass** eine lichtstreuend wirkende Fehlstruktur im Inneren wenigstens eines der plattenförmigen Elemente mittels Laserstrahlen erzielt wurde.

5. Als Bodeneinbauleuchte oder als Treppenstufe ausgebildetes Bauelement nach einem der Ansprüche 1 bis 4, **dadurch gekennzeichnet, dass** die Fläche wenigstens eines der plattenförmigen Elemente wenigstens einseitig ein durch Sandstrahlen, Ätzen, Beschichten, Gravieren oder Bekleben mit Partikeln erzeugtes Punktraster, Strichraster oder sonstiges Raster zur Lichtstreuung aufweist.

6. Als Bodeneinbauleuchte oder als Treppenstufe ausgebildetes Bauelement nach einem der Ansprüche 1 bis 5, **dadurch gekennzeichnet, dass** die Leuchtmittel (16) auf einem Streifen oder in einer Reihe angeordnet sind.

7. As Bodeneinbauleuchte oder als Treppenstufe ausgebildetes Bauelement nach einem der Ansprüche 1 bis 6, **dadurch gekennzeichnet, dass** eine die plattenförmigen Elemente (14,15) einfassende Rahmenkonstruktion (18) vorgesehen ist und diese das oder die Leuchtmittel (16) mindestens teilweise nach oben hin abdeckt.

8. Als Bodeneinbauleuchte oder Treppenstufe ausgebildetes Bauelement nach einem der Ansprüche 1 bis 7, **dadurch gekennzeichnet, dass** wenigstens ein plattenförmiges Element (14, 15) aus Verbundglas vorgesehen ist.

9. Als Bodeneinbauleuchte oder als Treppenstufe ausgebildetes Bauelement nach Anspruch 8, **dadurch gekennzeichnet, dass** bei mehreren ein Verbundglas bildenden plattenförmigen Elementen Licht in wenigstens eines dieser plattenförmigen Elemente stirnseitig eingestrahlt wird.

10. Als Bodeneinbauleuchte oder als Treppenstufe ausgebildetes Bauelement nach einem der Ansprüche 1 bis 9, **dadurch gekennzeichnet, dass** dieses Solarzellenelemente umfasst, die entweder an oder auf einem plattenförmigen Element angebracht oder Teil einer Verbundglasanordnung sind.

11. Als Bodeneinbauleuchte oder als Treppenstufe ausgebildetes Bauelement nach einem der Ansprüche 1 bis 10, **dadurch gekennzeichnet, dass** Steuereinrichtungen (20, 21) sowie Sensoren (27) vorgesehen sind, die eine Steuerung der Leuchtmittel in Abhängigkeit vom einfallenden Tageslicht, abhängig von einer in der Nähe anwesenden Person oder nach einem beliebigen vorgegebenen Programm bewirken.

12. Als Bodeneinbauleuchte oder als Treppenstufe ausgebildetes Bauelement nach einem der Ansprüche 1 bis 11, **dadurch gekennzeichnet, dass** als Sensoren wenigstens eine Fotozelle und/oder ein Bewegungsmelder (27) vorgesehen ist.

13. Als Bodeneinbauleuchte oder als Treppenstufe ausgebildetes Bauelement nach einem der Ansprüche 1 bis 12, **dadurch gekennzeichnet, dass** dieses eine in den Fußboden eines Gebäudes eingelassene Leuchte ist und im Wesentlichen bündig mit der umgebenden Fußbodenfläche abschließt.

14. Als Bodeneinbauleuchte oder als Treppenstufe ausgebildetes Bauelement nach einem der Ansprüche 1 bis 12, **dadurch gekennzeichnet, dass** dieses in eine Treppenstufe (31,32) innerhalb oder außerhalb eines Gebäudes eingelassen ist oder eine Treppenstufe bildet.

15. Als Bodeneinbauleuchte oder als Treppenstufe ausgebildetes Bauelement nach einem der Ansprüche 1 bis 12, **dadurch gekennzeichnet, dass** dieses eine in einen Bodenbereich außerhalb eines Gebäudes eingelassene befahrbare Bodenleuchte (10) ist und im Wesentlichen mit dem umgebenden Bodenbereich (25) bündig in einer Ebene abschließt.

16. Als Bodeneinbauleuchte oder als Treppenstufe ausgebildetes Bauelement nach einem der Ansprüche 1 bis 12, **dadurch gekennzeichnet, dass** dieses eine Garten-oder Parkleuchte ist.

17. Als Bodeneinbauleuchte oder als Treppenstufe ausgebildetes Bauelement nach einem der Ansprüche 1 bis 12, **dadurch gekennzeichnet, dass** dieses in einen Balkonboden oder eine Terrasse eingelassen ist.

## Claims

1. A constructive element provided as a recessed floor lighting fitting or as a step for a walkable and/or travelable area inside or outside a building,
comprising an in essence translucent approximately plate-shaped element and an illumination device with at least one illumination element,
in which the illumination element (16) injects light into the front face of the plate-shaped element (14),
in which this one plate-shaped element (14) is arranged to diffuse light and thus this light is at least partially deflected in an approximately perpendicular direction to that of the injected light, so that it is transferred upwards via the surface of the plate-shaped element,
in which this plate-shaped element (14, 15) is provided with a material strength that is adequate for a higher weight load,
in which the plate-shaped element for light diffusing purposes has a printed surface on at least one side,
in which as illumination elements (16) are provided a number of LEDs or SMDs,
and in which control arrangements (19) are provided for the illumination elements (16) so as to control them in such a fashion that they transfer either coloured light and so as to change the light colour.

2. The constructive element provided as a recessed floor lighting fitting or as a step as claimed in claim 1, **characterized in that** at least one plate-shaped element (14) is a glass pane or plastic glass pane.

3. The constructive element provided as a recessed floor lighting fitting or as a step as claimed in claim 1 or 2, **characterized in that** at least one plate-shaped element (14) is printed at least on one side in a dot matrix (17), line matrix or similar matrix form.

4. The constructive element provided as a recessed floor lighting fitting or as a step as claimed in any one of claims 1 to 3, **characterized in that** a flawed structure diffusing light in the interior of at least one of the plate-shaped elements was achieved by means of laser beams.

5. The constructive element provided as a recessed floor lighting fitting or as a step as claimed in any one of the claims 1 to 4, **characterized in that** the surface of at least one of the plate-shaped elements has at least on one side a dot matrix, line matrix or similar matrix form for light diffusion produced by means of sand blasting, etching, coating, engraving or particles bonded to it.

6. The constructive element provided as a recessed floor lighting fitting or as a step as claimed in any one of the claims 1 to 5, **characterized in that** the illumination elements (16) are installed on a strip or in a row.

7. The constructive element provided as a recessed floor lighting fitting or as a step as claimed in any one of the claims 1 to 6, **characterized in that** a frame structure (18) including the plate-shaped elements (14, 15) is provided and this frame structure covers at least partially upwards the illumination element or illumination elements (16).

8. The constructive element provided as a recessed floor lighting fitting or as a step as claimed in any one of the claims 1 to 7, **characterized in that** at least one plate-shaped element (14, 15) is provided made of laminated glass.

9. The constructive element provided as a recessed floor lighting fitting or as a step as claimed in claim 8, **characterized in that** in case of a plurality of plate-shaped elements formed by laminated glass, light is injected into the front face of at least one of these plate-shaped elements.

10. The constructive element provided as a recessed floor lighting fitting or as a step as claimed in any one of the claims 1 to 9, **characterized in that** it comprises solar cell elements which are fixed either to or onto a plate-shaped element or are part of a laminated glass array.

11. The constructive element provided as a recessed floor lighting fitting or as a step as claimed in any one of the claims 1 to 10, **characterized in that** control devices (20, 21) such as sensors (27) are provided which cause a control of the illumination elements to take place in dependence on incident daylight, in dependence on a person present in the vicinity or according to an arbitrary predefined program.

12. The constructive element provided as a recessed floor lighting fitting or as a step as claimed in any one of the claims 1 to 11, **characterized in that** as sensors are provided at least a photoelectric cell and/or a motion detector (27).

13. The constructive element provided as a recessed floor lighting fitting or as a step as claimed in any one of the claims 1 to 12, **characterized in that** it is an illumination element embedded in the floor of a building and is in essence flush mounted with the surrounding floor surface.

14. The constructive element provided as a recessed floor lighting fitting or as a step as claimed in any one of the claims 1 to 12, **characterized in that** it is embedded in a step (31, 32) inside or outside a building or forms a step.

15. The constructive element provided as a recessed floor lighting fitting or as a step as claimed in any one of the claims 1 to 12, **characterized in that** it is a travelable floor illumination element (10) embedded in a floor area outside a building and is in essence flush mounted in one plane with the surrounding floor area (25).

16. The constructive element provided as a recessed floor lighting fitting or as a step as claimed in any one of the claims 1 to 12, **characterized in that** it is a garden or park light.

17. The constructive element provided as a recessed floor lighting fitting or as a step as claimed in any one of the claims 1 to 12, **characterized in that** it is embedded in a balcony floor or a terrace.

## Revendications

1. Elément de construction conçu comme une lampe encastrée dans le sol ou comme une marche d'escalier pour une zone à emprunter à pied et/ou à bord d'un véhicule à l'intérieur ou à l'extérieur d'un bâtiment,
comprenant un élément en forme approximative de plaque essentiellement perméable à la lumière et un dispositif d'éclairage avec au moins un moyen luminescent,
le moyen luminescent (16) diffusant de la lumière par l'avant dans l'élément (14) en forme de plaque,
cet élément en forme de plaque (14) étant conçu pour disperser la lumière et, de ce fait, diffusant cette lumière, du moins en partie, presque perpendiculairement à cette direction de diffusion de telle sorte qu'elle soit diffusée vers le haut sur la surface de l'élément en forme de plaque,
cet élément en forme de plaque (14,15) étant prévu avec une résistance de matériau suffisante pour une charge pondérale plus élevée,
l'élément en forme de plaque étant imprimé en surface sur au moins un côté en vue de la conception pour la dispersion de la lumière,
un nombre de diodes électroluminescentes (DEL) ou de CMS (composants pour montage en surface) est prévu comme moyen luminescent (16),
et des dispositifs de commande (19) étant prévus pour les moyens luminescents (16) afin de commander ceux-ci de telle sorte que ceux-ci délivrent cette lumière colorée et pour modifier la couleur de la lumière.

2. Elément de construction conçu comme une lampe encastrée dans le sol ou comme une marche d'escalier selon la revendication 1 **caractérisé en ce qu'**au moins un élément (14) en forme de plaque est un disque en verre ou un disque en plastique.

3. Elément de construction conçu comme une lampe encastrée dans le sol ou comme une marche d'escalier selon la revendication 1 ou 2 c**aractérisé en ce qu'**au moins un élément (14) en forme de plaque est imprimé, au moins d'un côté, en une trame de points (17), une trame de barres ou une trame similaire.

4. Elément de construction conçu comme une lampe encastrée dans le sol ou comme une marche d'escalier selon les revendications 1 à 3 **caractérisé en ce qu'**une structure manquante ayant pour action de disperser la lumière a été obtenue à l'intérieur d'au moins un des éléments en forme de plaque à l'aide de rayons laser.

5. Elément de construction conçu comme une lampe encastrée dans le sol ou comme une marche d'escalier selon les revendications 1 à 4 **caractérisé en ce que** la surface d'au moins l'un des éléments en forme de plaque présente au moins d'un côté une trame de points, une trame de barres ou une autre trame pour la dispersion de la lumière, obtenue par sablage, attaque, revêtement, gravure ou collage avec des particules.

6. Elément de construction conçu comme une lampe encastrée dans le sol ou comme une marche d'escalier selon les revendications 1 à 5 **caractérisé en ce que** les moyens luminescents (16) sont disposés sur une bande ou en une rangée.

7. Elément de construction conçu comme une lampe encastrée dans le sol ou comme une marche d'escalier selon les revendications 1 à 6 **caractérisé en ce qu'**il est prévu une construction de cadre (18) comprenant les éléments en forme de plaque (14,15) et que celle-ci recouvre vers le haut, du moins en partie, le ou les moyens luminescents (16).

8. Elément de construction conçu comme une lampe encastrée dans le sol ou comme une marche d'escalier selon les revendications 1 à 7 **caractérisé en ce qu'**au moins un élément en forme de plaque (14,15) est prévu en verre feuilleté.

9. Elément de construction conçu comme une lampe encastrée dans le sol ou comme une marche d'escalier selon la revendication 8 **caractérisé en ce que** la lumière est dispersée vers l'avant dans au moins un de ces éléments en forme de plaque lorsque plusieurs éléments en forme de plaque forment un verre feuilleté.

10. Elément de construction conçu comme une lampe encastrée dans le sol ou comme une marche d'escalier selon les revendications 1 à 9 **caractérisé en ce que** celui-ci comprend des éléments à cellule solaire qui, soit sont appliqués contre ou sur un élément en forme de plaque, soit font partie de cet ensemble en verre feuilleté.

11. Elément de construction conçu comme une lampe encastrée dans le sol ou comme une marche d'escalier selon une des revendications 1 à 10 **caractérisé en ce que** des dispositifs de commande (20,21) ainsi que des capteurs (27) sont prévus et assurent une commande des moyens luminescents en fonction de la lumière du jour incidente, en fonction de l'approche d'une personne ou selon un programme quelconque préalablement déterminé.

12. Elément de construction conçu comme une lampe encastrée dans le sol ou comme une marche d'escalier selon une des revendications 1 à 11 **caractérisé en ce qu'**au moins une cellule photoélectrique et/ou un détecteur de mouvement (27) sont prévus comme capteur.

13. Elément de construction conçu comme une lampe encastrée dans le sol ou comme une marche d'escalier selon une des revendications 1 à 12 **caractérisé en ce que** celui-ci est une lampe intégrée dans le plancher d'un bâtiment et affleure essentiellement avec la surface environnante du plancher.

14. Elément de construction conçu comme une lampe encastrée dans le sol ou comme une marche d'escalier selon une des revendications 1 à 12 **caractérisé en ce que** celui-ci est intégré dans une marche d'escalier (31, 32) à l'intérieur ou l'extérieur d'un bâtiment ou forme une marche d'escalier.

15. Elément de construction conçu comme une lampe encastrée dans le sol ou comme une marche d'escalier selon une des revendications 1 à 12 **caractérisé en ce que** celui-ci est une lampe de sol (10) sur laquelle on peut passer avec un véhicule, encastrée dans une zone de sol à l'extérieur d'un bâtiment et affleure essentiellement dans un plan avec la zone de sol (25) environnante.

16. Elément de construction conçu comme une lampe encastrée dans le sol ou comme une marche d'escalier selon une des revendications 1 à 12 **caractérisé en ce qu'**il s'agit d'un éclairage de jardin ou de parc.

17. Elément de construction conçu comme une lampe encastrée dans le sol ou comme une marche d'escalier selon lune des revendications 1 à 12 **caractérisé en ce que** celui-ci est encastré dans un sol de balcon ou une terrasse.
